# FASCICULE DE BREVET EUROPEEN

(11) **EP 1 909 558 B1**
(45) Date de publication et mention de la délivrance du brevet: **08.11.2017**
(21) Numéro de dépôt: 06794231.8
(22) Date de dépôt: 27.07.2006
(51) Int. Cl.: A01G 9/02

(54) **PAROI VEGETALISEE ET ELEMENTS CONSTITUTIFS**
BEWACHSENE WAND UND IHRE ELEMENTE
VEGETATED WALL AND CONSTITUTIVE ELEMENTS THEREOF

(30) Priorité: 02.08.2005 FR 0508301
(43) Date de publication de la demande: 16.04.2008
(73) Titulaire: GREENWALL SYSTEMS, 78870 Bailly (FR)
(72) Inventeur: DAURES, Jean François, F-34000 Montpellier (FR); MAURETTE, Claude, F-31000 Toulouse (FR)
(74) Mandataire: Cabinet Plasseraud
(86) Numéro de dépôt international: PCT/FR2006/001833
(87) Numéro de publication internationale: WO 2007/014993

(56) Documents cités:
- WO-A-2004/061255
- WO-A-2006/010846
- DE-A1- 2 636 917
- FR-A1- 2 857 396
- US-A- 5 373 662
- US-A- 6 098 337

## Description

La présente invention concerne une paroi végétalisée destinée à être posée sur un mur de construction, afin de constituer à la fois élément de décoration, élément d'isolation thermique et élément d'isolation phonique, ainsi qu'un procédé de création d'une telle paroi.

L'état de la technique la plus proche de l'invention est constitué par le brevet français n° 96.04526 (BLANC Patrick) et par le brevet PCT/EP88/00047 (MIELKE).

Le brevet BLANC décrit un dispositif pour la culture sans sol de plantes sur une surface sensiblement verticale qui comprend, appliqué contre une paroi support par exemple un mur, une nappe d'un matériau imputrescible rétenteur d'eau et des parois superposées inclinées ménageant des ouvertures propres à la mise en place des plantes. La technique du brevet BLANC présente l'inconvénient que la plante ne peut être mise en place et cultivée sur le site qu'après montage du dispositif sur le mur.

Le brevet MIELKE décrit des éléments pour végétaliser un mur, qui sont constitués par des caissettes juxtaposées et superposées avec ouverture frontale dont le fond et les parois latérales ne sont pas dotées d'ouvertures autres que celles nécessaires au passage des liquides nutritifs, notamment l'eau et qui reçoit un substrat dans lequel les plantes vont s'enraciner. L'application de ce brevet est limitée à la mise en place de gazon sur les murs. Un des inconvénients de ce brevet MIELKE est l'ouverture frontale des cassettes qui soumet les plantes et les substrats aux attaques des intempéries.

Dans l'état de la technique antérieure citée, la mise en culture des plantes est prévue après mise en place des éléments constitutifs sur la paroi à habiller, ce qui est parfois difficile lorsqu'il faut effectuer ces opérations sur des grandes hauteurs.

De plus, ce mode opératoire n'apporte pas de solution au niveau des aléas de la culture des plantes, qui peut réussir ou être un échec, auquel cas le mur reste nu ou avec des zone vides de végétation.

En outre, dans ces techniques connues, il n'est pas possible, sans des interventions répétées sur le site et donc un surcoût important, de varier les qualités de plantes et/ou de les mélanger lorsqu'elles ont des cycles de culture différents.

On connait aussi par FR 2 857 396 une paroi végétalisée selon le préambule de la revendication 1.

La présente invention vise à remédier à ces inconvénients en réalisant un élément mural qui peut être utilisé pour effectuer une préculture du végétal et qui permet d'installer une large palette de plantations diverses parfaitement développées au moment de la pose sur le mur, notamment grâce à l'emploi d'éléments amovibles qu'il est facile de fixer et de déplacer.

L'invention permet de réaliser un mur végétalisé support de fonctionnalité nouvelle, par exemple par l'utilisation de plantes odoriférantes et/ou dépolluantes.

L'invention permet de réaliser un revêtement de mur qui peut être parfaitement adapté à la climatologie de la zone géographique où il doit être réalisé puisque selon l'invention, les plantations peuvent être sélectionnées et combinées entre elles. Il est également très facile de renouveler le revêtement végétal au fil des saisons.

L'invention permet en outre de réaliser un revêtement de mur qui est un isolant thermique et aussi, parce qu'il répond à la loi acoustique de masse/ressort/masse et qu'il offre à l'extérieur une surface absorbante non réverbérante, qui est un isolant phonique.

A cet effet, la paroi végétalisée selon l'invention, du type connu par FR 2 857 396, est selon la revendication 1.

Selon des modes préférés de réalisation, les supports reçoivent une pluralité de paniers juxtaposés et superposés sur plusieurs rangs. Ces paniers sont des paniers de forme parallélépipédique fermés sur toutes leurs faces et à mailles ouvertes dans lequel est logé un substrat de culture de la ou des plantes.

Cette disposition de l'invention permet, d'une part, de cultiver les plantes avant la pose sur le mur, ce qui permet de choisir les paniers dans lesquels la culture est un succès.

Cette disposition de l'invention permet en outre de réaliser des combinaisons de variétés différentes, quelle que soit la durée de leur cycle de culture.

Cette disposition de l'invention permet en outre de remplacer facilement les plantes, par exemple lorsque leur cycle floral est terminé.

Un autre objet de l'invention est un procédé de réalisation d'une paroi végétalisée consistant à installer sur des supports juxtaposés couvrant la surface d'un mur à végétaliser et dotés d'un système d'irrigation intégrée, une pluralité de paniers à mailles ouvertes contenant un substrat sur lequel un végétal a été préalablement mis en culture, et mis en oeuvre avec le dispositif selon l'invention.

D'autres avantages et caractéristiques de l'invention apparaîtront à la lecture de la description ci-après une réalisation de l'invention donnée à titre d'exemple non limitatif et illustrée par les dessins joints dans lesquels :
- La figure 1 est une vue d'un panier selon l'invention fermé ;

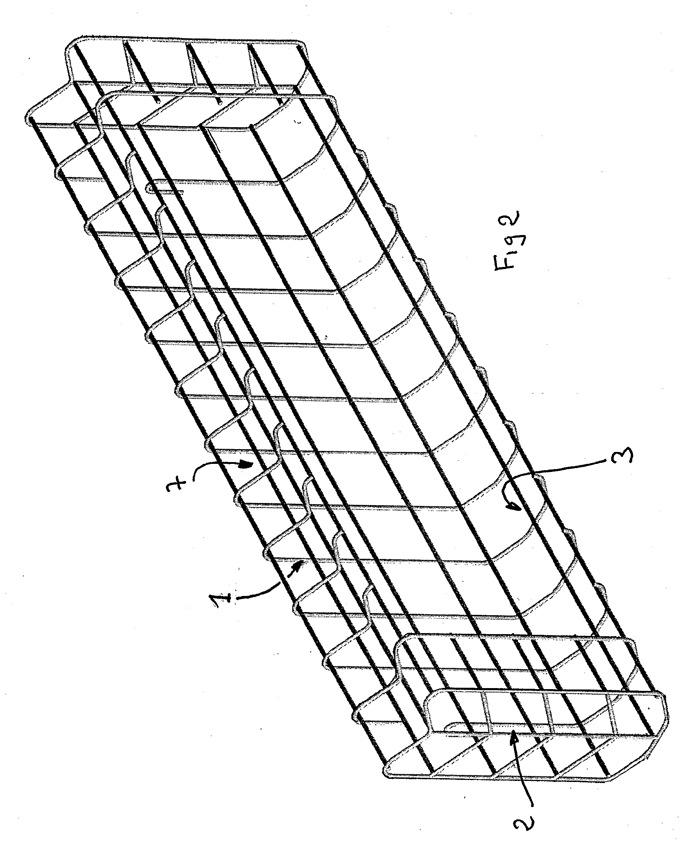

- La figure 2 est une vue d'un panier selon l'invention ouvert ;
- La figure 3 est une vue arrière du panier selon l'invention ;
- La figure 4 est une vue d'un chevalet support de culture des plantes dans les paniers avant la pose.

L'invention concerne une paroi végétalisée destinée à être posée sur un mur de construction ou toute autre structure verticale ou inclinée.
Pour simplifier les dessins, le mur n'est pas représenté.

Sur la structure verticale du mur est disposé un support non représenté en un ou plusieurs éléments juxtaposés. Le ou les supports peuvent avantageusement être disposés à une certaine distance du mur avec un espacement qui ménage une lame d'air.

Le support est constitué d'une structure de préférence plane qui peut être constituée par un treillis métallique rigide, par un grillage, par un support en bois, en terre cuite ou en matériau synthétique.
Le support est avantageusement pourvu de moyens de fixation par accrochage amovible des paniers de tout type connu.

Le panier selon l'invention est constitué d'un treillis métallique à mailles ouvertes constitué de fils métalliques traités contre la corrosion, par exemple plastifiés ou galvanisés et soudés entre eux, certains de ces fils étant horizontaux et d'autres verticaux.

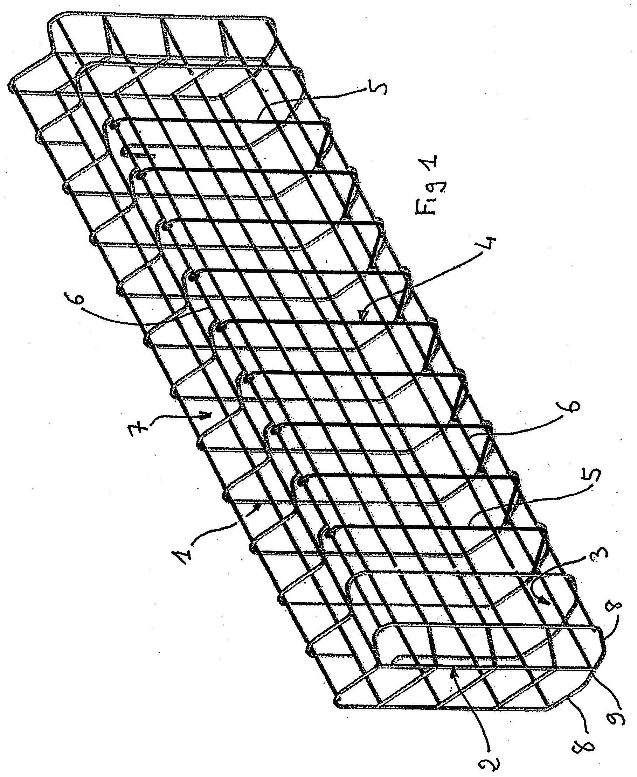

De préférence, chaque panier a une forme parallélépipédique avec une face arrière 1 fixe, des faces latérales 2, et des faces supérieure 7 et inférieure 3 et une porte frontale 4 en face avant (figure 1) pour permettre la mise en place du substrat et des plantes.

A cet effet, la porte 4 est articulée en sa partie haute ou en sa partie basse et est dotée de moyens de fixation du coté opposé à l'articulation.

Avantageusement, l'articulation de la porte est constituée par la conformation en boucle d'au moins deux des fils verticaux 5 de la porte qui enserrent un des fils horizontaux 6 du panier.

Le moyen de blocage de la porte est constitué par une conformation en crochet de l'extrémité de au moins deux des fils verticaux 5 qui s'encliquettent sur un des fils horizontaux 6 du panier.

Les dimensions des paniers peuvent être variables selon les cas de figure par exemple 200 millimètres de long sur 200 millimètres de haut et 85 millimètres de large.

La longueur peut être un multiple de 200 millimètres, par exemple 400 ou 600 millimètres.

Selon une caractéristique intéressante de l'invention, les conduits d'alimentation en liquide nutritif (eau et/ou engrais) du système d'irrigation passent librement entre les paniers. Il n'est donc pas nécessaire de modifier le circuit d'irrigation lorsque l'on souhaite installer un panier sur le support ou le retirer.

Suivant une forme préférée de réalisation de l'invention, la face supérieure transversale 7 du panier est conformée en creux pour permettre le passage des conduits perforés d'alimentation du substrat des plantes en liquide nutritif.

La face tranversale inférieure 3 du panier est conformée en pointe tronquée avec deux portions 8 inclinées, chacun de ses fils constitutifs inclinés vers l'axe médian longitudinal et une partie médiane 9 horizontale entre les portions 8 dans laquelle les fils sont horizontaux.

Cette disposition permet à la fois un emboîtement des paniers les uns sur les autres avec une solidarisation entre eux et un libre passage pour le conduit perforé d'alimentation en liquide nutritif à partir d'une unité centrale de distribution programmable non représentée. Les paniers sont juxtaposés et superposés sur plusieurs rangs.

Il va de soi que sans sortir du cadre de l'invention, les faces latérales verticales 2 des paniers peuvent également, pour l'une d'entre elles être conformées en pointe faisant saillie, et pour l'autre en creux afin d'obtenir un effet de blocage latéral des paniers entre eux.

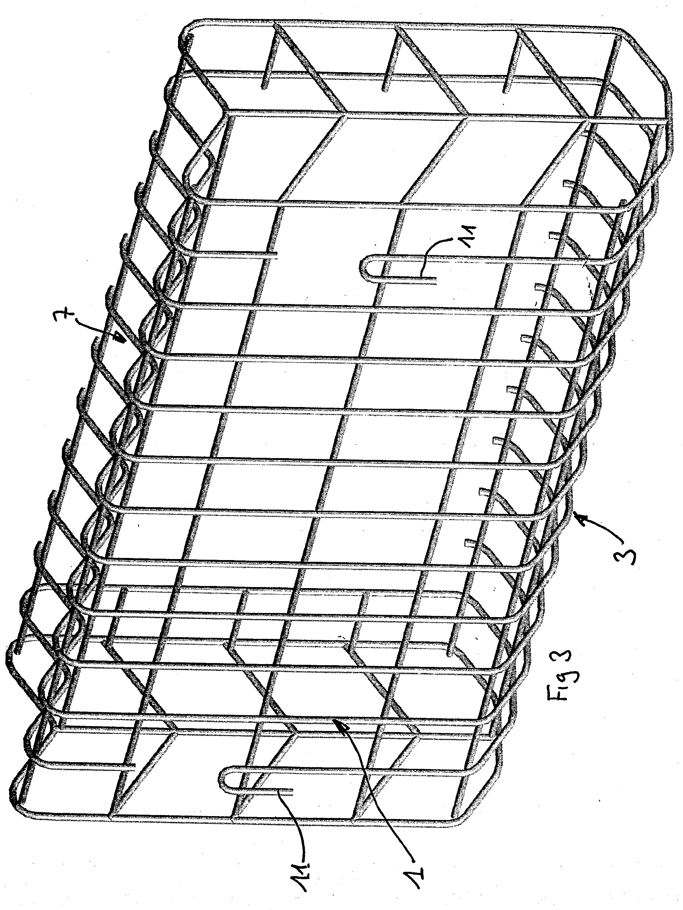

Dans l'exemple de réalisation du panier (figure 3), la face arrière 1 du panier est dotée de deux crochets 11 de fixation amovible sur le support. Ces deux crochets 11 proviennent de la fabrication par sectionnement et repliement de deux fils parallèles verticaux constitutifs du panier, un de chaque coté de celui-ci. Il va de soi que tout autre moyen d'accrochage amovible peut être adapté.

Le panier peut également être réalisé par repliement et/ou enroulement d'une bande de grillage plastifié ou galvanisé ou traité anti-corrosion de toute manière connue autour du substrat.

Le panier peut également être réalisé en matériau synthétique avec des ouvertures du type mailles ouvertes ou en tissus de même type ou en tout autre matériau.

Préalablement à la mise en culture des plantes, le panier est rempli par un substrat qui est de préférence d'origine végétale avec un fort pouvoir rétenteur d'eau et de restitution. On laisse ensuite les plantes se développer suffisamment pour obtenir une bonne couverture végétale.

On réalise cette pré-culture à plat sur le sol ou en position verticale ou sensiblement verticale pour acclimater la plante. De préférence, on conduit la pré-culture du végétal dans des paniers installés sur un support reproduisant les conditions d'un mur tel qu'un chevalet présentant au moins une paroi support inclinée.

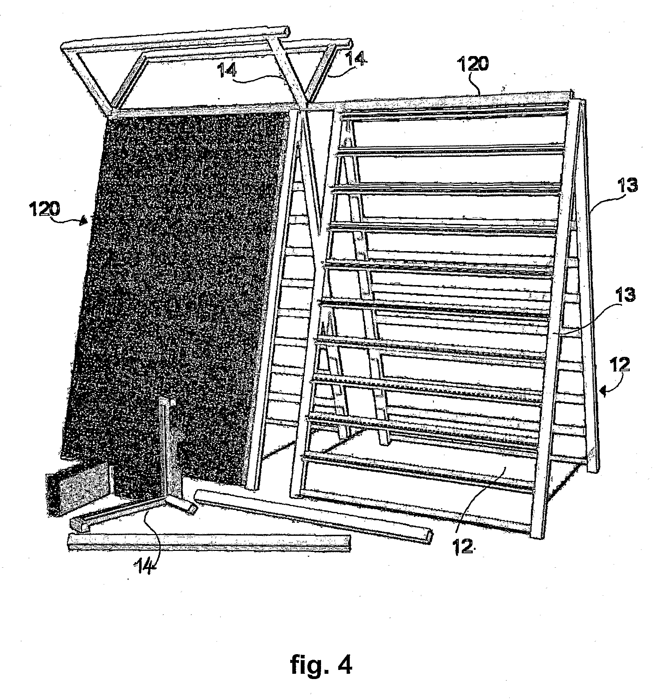

A cet effet, selon l'invention, un support de culture a été conçu, ce support de culture est représenté à la figure 4. Il est constitué d'un chevalet 120 présentant au moins une et de préférence deux parois inclinées 12 articulées à leur sommet. Chacune des parois 12 est constituée par un grillage rigide fixé sur un cadre 13 ou par des traverses. Les deux cadres sont réunis à leur sommet par une articulation. Au-dessus de l'articulation sont montés des supports 14 pour les conduites d'alimentation en liquide nutritifs.

Il est ensuite possible d'utiliser ce chevalet pour le transport des paniers contenant le végétal développé jusqu'au site où ils doivent être installés.

Puis, on procède à l'accrochage des paniers sur les supports muraux, en prenant soin de placer les conduits d'irrigation dans le sillon creux prévu sur la face supérieure des paniers.

La conformation du mur végétalisé à partir de modules individualisés du type panier à mailles ouvertes présente de nombreux avantages.

Elle permet la mise en culture des plantes préalablement à la pose des paniers sur le ou les supports et ce, si besoin dans des sites différents en fonction du climat, de la saison et/ou de la spécialisation des horticulteurs chargés de la mise en culture.

La conformation en panier facilite le transport depuis les sites de culture vers les lieux de mise en place.

## Revendications

1. Paroi végétalisée comprenant des supports disposés sur ou à faible distance d'un mur à recouvrir, un système d'irrigation intégrée, et une pluralité de paniers à mailles ouvertes dans lesquels est logé un substrat de culture d'un végétal, lesdits paniers étant associés auxdits supports de manière amovible, de sorte que les paniers peuvent être déplacés, **caractérisée en ce que** la face inférieure de chaque panier est conformée en pointe tronquée avec deux portions (8) inclinées vers l'axe médian longitudinal et une partie médiane (9) horizontale.

2. Paroi végétalisée selon la revendication 1 **caractérisée en ce que** les paniers sont juxtaposés et superposés sur plusieurs rangs.

3. Paroi végétalisée selon la revendication 1 **caractérisée en ce que** chaque panier a une forme parallélépipédique avec une face arrière (1) fixe, des faces latérales (2), des faces supérieure (7) et inférieure (3) et une porte frontale (4) pour permettre la mise en place du substrat des plantes.

4. Paroi végétalisée selon l'une quelconque des revendications précédentes **caractérisée en ce que** les conduits d'alimentation en liquide nutritif du système d'irrigation passent librement entre les paniers.

5. Paroi végétalisée selon la revendication précédente caractérisée en ce chaque panier comprend une face supérieure (7) conformée en creux pour le passage du conduit d'alimentation en liquide nutritif.

6. Paroi végétalisée selon l'une quelconque des revendications précédentes **caractérisée en ce que** chaque panier est constitué par assemblage entre eux de fils métalliques horizontaux (6) et verticaux (5) ménageant des mailles ouvertes.

7. Paroi végétalisée selon l'une quelconque des revendications précédentes **caractérisée en ce que** chaque panier est doté d'un dispositif (11) d'accrochage amovible.

8. Procédé de réalisation d'une paroi végétalisée consistant à installer, sur des supports juxtaposés couvrant la surface d'un mur à végétaliser et dotés d'un système d'irrigation intégrée, une pluralité de paniers à mailles ouvertes contenant un substrat sur lequel un végétal a été préalablement mis en culture, **caractérisé en ce qu'**il met en oeuvre un dispositif selon l'une des revendications 1 à 7.

9. Procédé de réalisation d'une paroi végétalisée selon la revendication précédente **caractérisé en ce que** pour la culture préalable du végétal dans les paniers, lesdits paniers sont installés sur un chevalet présentant au moins une paroi support inclinée.

10. Procédé selon la revendication précédente **caractérisé en ce que** le chevalet est utilisé pour le transport des paniers jusqu'au lieu d'installation.

## Patentansprüche

1. Bewachsene Wand, umfassend Träger, die an einer zu bedeckenden Mauer oder in einem geringen Abstand zu einer selbigen angeordnet sind, ein integriertes Bewässerungssystem und eine Mehrzahl von Körben mit offenen Maschen, die ein Pflanzenzuchtsubstrat aufnehmen, wobei die Körbe in beweglicher Weise mit den Trägern verbunden sind, sodass die Körbe verlagert werden können, **dadurch gekennzeichnet, dass** die Innenseite jedes Korbs als abgestumpfte Spitze mit zwei zur mittleren Längsachse geneigten Abschnitten (8) und einem horizontalen Mittelteil (9) ausgebildet ist.

2. Bewachsene Wand nach Anspruch 1 **dadurch gekennzeichnet, dass** die Körbe in mehreren Reihen nebeneinander und übereinander angeordnet sind.

3. Bewachsene Wand nach Anspruch 1, **dadurch gekennzeichnet, dass** jeder Korb eine Quaderform mit einer festen Rückseite (1), lateralen Seiten (2), einer oberen (7) und einer unteren Seite (3) sowie einer Vordertür (4), welche die Anbringung des Pflanzensubstrats ermöglicht, aufweist.

4. Bewachsene Wand nach einem der vorangehenden Ansprüche, **dadurch gekennzeichnet, dass** die Nährflüssigkeitsversorgungsleitungen des Bewässerungssystems frei zwischen den Körben verlaufen.

5. Bewachsene Wand nach dem vorangehenden Anspruch, **dadurch gekennzeichnet, dass** jeder Korb eine obere Seite (7) umfasst, die für die Durchführung der Nährflüssigkeitsversorgungsleitung hohl ausgebildet ist.

6. Bewachsene Wand nach einem der vorangehenden Ansprüche, **dadurch gekennzeichnet, dass** jeder Korb durch Verbindung horizontaler (6) und vertikaler (5) Metalldrähte, die offene Maschen ausbilden, geschaffen ist.

7. Bewachsene Wand nach einem der vorangehenden Ansprüche, **dadurch gekennzeichnet, dass** jeder Korb mit einer beweglichen Befestigungsvorrichtung (11) ausgestattet ist.

8. Verfahren zur Ausführung einer bewachsenen Wand, bestehend aus dem Anbringen einer Mehrzahl von Körben mit offenen Maschen, die ein Substrat beinhalten, in dem zuvor eine Pflanze angezüchtet wurde, an nebeneinanderliegenden Trägern, welche die Fläche einer zu bewachsenden Wand bedecken und mit einem integrierten Bewässerungssystem ausgestattet sind, **dadurch gekennzeichnet, dass** es eine Vorrichtung nach einem der Ansprüche 1 bis 7 umsetzt.

9. Verfahren zur Ausführung einer bewachsenen Wand nach dem vorangehenden Anspruch, **dadurch gekennzeichnet, dass** die Körbe zur vorherigen Anzucht der Pflanze in den Körben an einem Gestell mit zumindest einer geneigten Wand angebracht sind.

10. Verfahren nach dem vorangehenden Anspruch, **dadurch gekennzeichnet, dass** das Gestell für den Transport der Körbe bis zum Ort der Anbringung genutzt wird.

## Claims

1. Wall planted with vegetation that comprises supports that are placed on or at a short distance from a wall to be covered, an integrated irrigation system, a number of open-mesh baskets in which a substrate for cultivating vegetation is housed, whereby said baskets are combined with said supports in a removable manner, such that the baskets can be removed, **characterized in that** the lower surface of each basket is shaped with a truncated end with two portions (8) that are inclined toward the longitudinal median axis and a horizontal median part (9).

2. Wall planted with vegetation according to claim 1, **characterized in that** the baskets are juxtaposed and placed one on top of the other in multiple rows.

3. Wall planted with vegetation according to claim 1, **characterized in that** each basket has a parallelepipedic shape with a stationary rear surface (1), lateral surfaces (2),upper (7) and lower (3) surfaces and a front door (4) for allowing the installation of the substrate of the plants.

4. Wall planted with vegetation according to anyone of the preceding claims, **characterized in that** the hoses for supplying nutrient liquid from the irrigation system pass freely between the baskets.

5. Wall planted with vegetation according to the preceding claim, **characterized in that** each basket comprises an upper surface (7) that is recessed to allow the hose for supplying nutrient liquid to pass through.

6. Wall planted with vegetation according to anyone of the preceding claims, **characterized in that** each basket is put together by interweaving horizontal and vertical metallic wires, providing open meshes.

7. Wall planted with vegetation according to anyone of the preceding claims, **characterized in that** each basket is equipped with a removable hanging device.

8. Process for the production of a wall planted with vegetation, wherein it consists in installing a number of open-mesh baskets-containing a substrate on which vegetation was previously cultivated-on juxtaposed supports that cover the surface of a wall to be planted with vegetation and that are equipped with an integrated irrigation system, **characterized in that** it implements a device according to one of claims 1-7.

9. Process for the production of a wall planted with vegetation according to the preceding claim, **characterized in that** for the preliminary cultivation of the vegetation in the baskets, said baskets are installed on a stand that has at least one inclined support wall.

10. Process according to the preceding claim, **characterized in that** the stand is used for the transport of the baskets to the installation site.
